(19) **Europäisches Patentamt / European Patent Office / Office européen des brevets**

(11) **EP 4 550 216 A1**

(12) # EUROPEAN PATENT APPLICATION

(43) Date of publication:
**07.05.2025 Bulletin 2025/19**

(21) Application number: **23207742.0**

(22) Date of filing: **03.11.2023**

(51) International Patent Classification (IPC):
**G06N 3/084** (2023.01)    **G06N 3/0985** (2023.01)

(52) Cooperative Patent Classification (CPC):
**G06N 3/084; G06N 3/0985**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Robert Bosch GmbH**
**70442 Stuttgart (DE)**

(72) Inventors:
• **Blaiotta, Claudia**
 **70178 Stuttgart (DE)**
• **Koehler, Jan Mathias**
 **71229 Leonberg (DE)**
• **Kutsche, Simon**
 **30161 Hannover (DE)**
• **Schott, Lukas**
 **70178 Stuttgart (DE)**

(54) **DEVICE AND METHOD FOR TRAINING A NEURAL NETWORK FOR MULTI-TASK LEARNING**

(57)    Computer-implemented method for training a first neural network (60) comprising the steps of:
• Receiving a training input signal ($x_i$), wherein the training input signal ($x_i$) comprises or is part of a signal (5) obtained from a sensor (30);
• Determining a plurality ($y_i$) of training output signals ($y_i^{(1)}, y_i^{(2)}, y_i^{(n)}$) by providing the training input signal ($x_i$) as input to the fist neural network (60), wherein each training output signal ($y_i^{(1)}, y_i^{(2)}, y_i^{(n)}$) from the plurality ($y_i$) of training output signals ($y_i^{(1)}, y_i^{(2)}, y_i^{(n)}$) characterizes a classification and/or a regression result of the training input signal ($x_i$);
• Determining a plurality of loss values ($\mathcal{L}^{(1)}, \mathcal{L}^{(2)}, \mathcal{L}^{(n)}$), wherein each loss value ($\mathcal{L}^{(1)}, \mathcal{L}^{(2)}, \mathcal{L}^{(n)}$) corresponds to a distinct training output signal ($y_i^{(1)}, y_i^{(2)}, y_i^{(n)}$) and characterizes a deviation of the training output signal ($y_i^{(1)}, y_i^{(2)}, y_i^{(n)}$) from a desired training output signal ($t_i^{(1)}, t_i^{(2)}, t_i^{(n)}$);
• Determining a weighted sum ($\mathcal{L}$) of the loss values ($\mathcal{L}^{(1)}, \mathcal{L}^{(2)}, \mathcal{L}^{(n)}$), wherein the weights ($\sigma^{(1)}, \sigma^{(2)}, \sigma^{(n)}$) for the loss values ($\mathcal{L}^{(1)}, \mathcal{L}^{(2)}, \mathcal{L}^{(n)}$) are determined by a second neural network (61);
• Training the first neural network (60) by updating parameters ($\Phi$) of the first neural network (60) according to a gradient of the sum ($\mathcal{L}$) with respect to the parameters ($\Phi$) of the first neural network (60) and by updating parameters of the second neural network (61) according to a gradient of the sum ($\mathcal{L}$) with respect the parameters of the second neural network (61).

Fig. 1

EP 4 550 216 A1

## Description

Technical field

The invention concerns a method for training a neural network, a method for determining an output for the trained neural network, a training system configured for training the neural network, a control system configured for controlling an actuator based on an output of the trained neural network, a computer program, and a machine-readable storage medium.

Prior art

Crawshaw"MULTI-TASK LEARNING WITH DEEP NEURAL NETWORKS: A SURVEY", September 10th, 2022, available at https://arxiv.org/pdf/2009.09796. pdf discloses a survey of methods for multi-task learning in machine learning.

Liu et al. "SSD: Single Shot MultiBox Detector", December 29th, 2016, available at https://arxiv.org/pdf/1512.02325.pdf discloses a method for detecting objects in images using a single deep neural network.

Technical background

Multi-task learning is a field of machine learning that deals with machine learning models being capable of solving multiple different tasks at once. For example, a multi-task neural network may be configured to accept images as input and provide outputs characterizing a semantic segmentation of the image and/or objects detected in the image and/or a classification of the image (e.g., with respect to which scene is depicted in the image).

For training such a neural network configured for multi-task learning, the neural network outputs a plurality of output signals, wherein each output signal is then compared to a desired output signal. This comparison results in a loss value for each output signal. For training, the different loss values need to be combined in order to determine a single loss value, which can then be used for training the neural network, e.g., by means of backpropagation.

Known approaches typically use a weighted sum for combining the loss values. In known approaches, the weights are then either fixed for each loss value, are based on an uncertainty concerning the respective loss values, or are randomly drawn from a probability distribution.

However, the inventors found that a prediction performance of neural networks configured for multi-task learning can be increased if the weights used for weighting the loss values are determined from a second neural network, in other words, the weights are the output of the second neural network and are then used for weighting the different loss values obtained from the neural network.

Disclosure of the invention

In a first aspect, the invention concerns a computer-implemented method for training a first neural network comprising the steps of:

- Receiving a training input signal, wherein the training input signal comprises or is part of a signal obtained from a sensor;
- Determining a plurality of training output signals by providing the training input signal as input to the fist neural network, wherein each training output signal from the plurality of training output signals characterizes a classification and/or a regression result of the training input signal;
- Determining a plurality of loss values, wherein each loss value corresponds to a distinct training output signal and characterizes a deviation of the training output signal from a desired training output signal;
- Determining a weighted sum of the loss values, wherein the weights for the loss values are determined by a second neural network;
- Training the first neural network by updating parameters of the first neural network according to a gradient of the weighted sum with respect to the parameters of the first neural network and by updating parameters of the second neural network according to a gradient of the weighted sum with respect to the parameters of the second neural network.

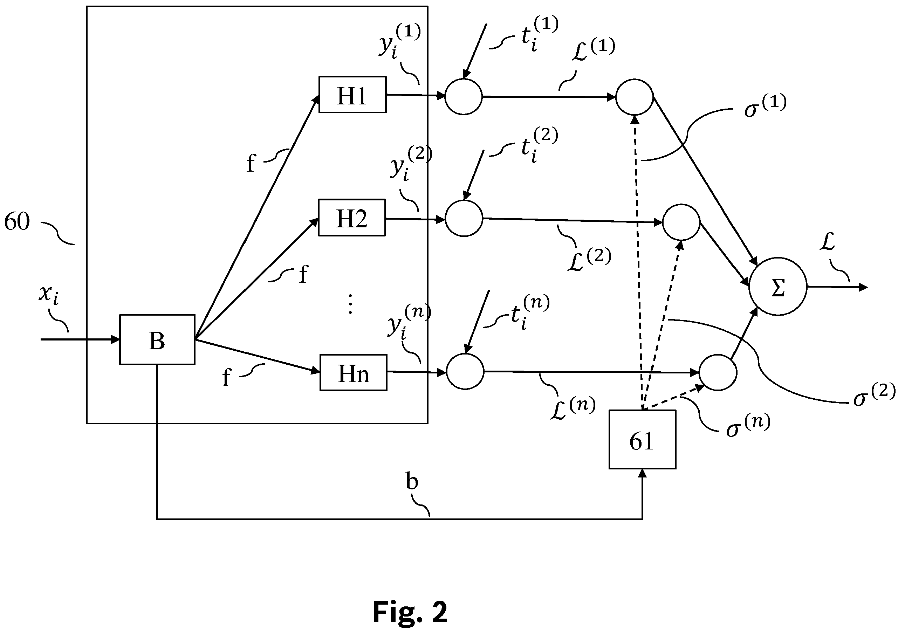

The first neural network may be understood as a machine learning system configured for multi-task learning. Preferably, the first neural network comprises a so-called backbone (sometimes also referred to as trunk), wherein the backbone processes an input of the neural network and outputs a feature representation. The backbone may be understood as sub-network of the first neural network, i.e., a plurality of layers connected according to a predefined architecture of the backbone. The backbone may, for example, be a feedforward neural network, especially a multilayer perceptron, a convolutional neural network, a vision transformer, or a visual transformer. The feature representation may then be provided as input to a plurality of so-called heads of the first neural network. The heads may be understood as distinct sub-networks of the first neural networks. In other words, the heads may be understood as not directly interacting with each other, preferably determining their results in parallel. However, heads may also gradually separate from a common path in the neural network (see, e.g., Liu et al., Fig. 2).

The first neural network is configured for determining a plurality of output signals, each output signal characterizing a classification and/or regression result for a signal obtained from a sensor, i.e., the sensor signal. In other words, the neural network is capable of accepting input signals that at least comprise the sensor signal. In some embodiments, the input signal may also consist of the sensor signal, i.e., the input signal may be the sensor signal. The sensor signal may especially be a digital image, i.e., a sensor signal obtained form an optical sensor such as a camera, a lidar sensor, a radar sensor, an ultrasonic sensor, or a thermal camera.

The output signals may especially characterize different semantic aspects of an input signal. For example, the plurality of output signals may characterize a semantic segmentation of the sensor signal and/or objects detected in the sensor signal and/or a classification of the surroundings the sensor signal was obtained from. Alternatively or additionally, the output signals may characterize different types of classifications, i.e., with respect to the presence or absence of certain attributes of the sensor signal (e.g., visual attributes when using images as input).

By providing the input signal as input to the first neural network, it is especially understood that the first neural network determines its output based on features of the sensor signal (e.g., pixels if the sensor signal is an image).

For training the first neural network, the training input signal is provided to the first neural network in order to determine the plurality of training output signals. Each output signal is then compared to a desired training output signal in a supervised-learning approach. For each such comparison, a loss value characterizing a deviation of the respective training output signal from its respective desired training output signal is then determined.

A regression result may especially be understood as a result of a non-discrete regression analysis, i.e., a single real value or multiple real values.

The plurality of loss values is then combined into a single loss value by means of a weighted sum. The weighted sum may hence be understood as a total loss value obtained for the input signal.

Advantageously, the weights of the weighted sum are determined from a second neural network. The inventors found this approach to be advantageous compared to known methods as the second neural network may also be trained. This way, the weights used for weighting the plurality of loss values is adapted to the specific characteristic of the data used for training, e.g., a distribution of the data used for training. By individually adapting the weights to the specifics of the data used for training, the method allows for an increased classification performance and/or more accurate regression results as training is adapted specifically to the data used for training.

The authors further found that faster the method for training allows for a faster adaptability to new data, improved stability of the training method (i.e., a larger robustness of the training method with respect to its hyperparameters) and quicker/better convergence (i.e., the method requires fewer steps to minimize the total loss value over a plurality of iterations). The authors further found that the bigger (deeper and wider) the second neural network the more those three factors improve.

In summary, the training method advantageously improves the performance of known training methods for training neural networks in a multitask training setting.

Having obtained a weighted sum of the loss values, the first neural network and the second neural network may then be trained by updating at least parts of their respective parameters based on the weighted sum. Preferably, the parameters may be updated according to a gradient descent approach, e.g., stochastic gradient. However, other optimization methods, such as evolutionary algorithms, are possible as well.

The training method may especially be run iteratively, i.e., in multiple iterations each iteration using at least one but preferably multiple training input signals, e.g., in form of a batched training.

The second neural network may use different inputs for determining the weights used for weighting the plurality of loss values. The exact type of input used for the second neural network may be understood as a hyperparameter of the training method and may be tuned by known methods.

The first types of input may derive from a probability distribution.

In some embodiments, the weights for the loss values are determined by the second neural network by providing a randomly drawn value, especially a value from a standard normal distribution, as input to the second neural network.

In other embodiments, the weights for the loss values are determined by the second neural network by providing a multidimensional value drawn from a multivariate distribution, especially a multivariate Dirichlet distribution or a multivariate normal distribution, as input to the second neural network.

Using probability distributions as inputs, the authors found that the exact probability distribution used for drawing the random value or the random values acts as a prior for the weights of the weighted sum, wherein the second neural network then determines a posterior for the weights giving the data used for training.

In other embodiments, the weights for the loss values are determined by the second neural network by providing an input to the second neural network, wherein the input is determined based on parameters of a layer of the first neural network, especially of a last layer of a backbone of the first neural network.

For example, the parameters of the layer may be used as the input of the second neural network.

In other embodiments, the parameters of the layer are at least part of the parameters updated during training of the first neural network and the parameters of the layer are used as input of the second neural network after updating the parameters of the layer.

This may be understood as the parameters of the first neural network being optimized in a previous iteration of the training and then using these weights in a consecutive iteration as input to the second neural network.

Likewise, a gradient of the parameters of the layer may be used as the input of the second neural network.

In other embodiments, the weights for the loss values are determined by the second neural network by providing a constant value or a plurality of constant values as input to the second neural network, wherein the constant value is preferably zeros or wherein the plurality of constant values is preferably a vector of zeros.

Surprisingly, the inventors found that even providing a constant value as input to the second neural network leads to the improvements described above. That is, the second neural network simply learns a good weighting of the individual loss values without requiring a hint in form of an "informative" input as to how the weighs may be obtained. By providing a constant value, the second neural network is tasked to learn a good weighting scheme all on its own and based on the data used for training.

In another aspect, the invention concerns a computer-implemented method for determining a plurality of output signals, wherein each output signal characterizes a classification and/or regression result with respect to an input signal, wherein the input signal comprises or is part of a sensor signal and wherein the plurality of output signals is determined by providing the input signal as input to a first neural network, wherein the first neural network has been trained with a method according to any one embodiment of the method for training.

This aspect may be understood as the inference counterpart for training the first neural network, i.e., deploying the first neural network. In the method for determining the plurality of output signals, the method for training may especially be conducted as a preliminary step in the method. Advantageously, the method for determining the plurality of output signals inherits its advantage from using the first neural network obtained according to the training method disclosed above, thereby allowing for an improved way of determining the plurality of output signals.

In another aspect, the invention concerns a training system, which is configured to carry out the training method as disclosed above. The training system may especially be a computer or computer system of distributed computers configured for executing the training method.

In another aspect, the invention concerns a control system, which is configured to carry out the method for determining the plurality of output signals, wherein the control system determines a control signal based on the plurality of output signals, wherein the control signal is configured to control an actuator and/or a display.

The control system may especially be configured to control an automated system, especially a robotic system, based on sensor measurements of an environment of the robotic system or based on sensor measurements concerning the robotic system itself, e.g., a state of operation such as a temperature of the automated system, an acceleration of the automated system, or a speed of the automated system.

Embodiments of the invention will be discussed with reference to the following figures in more detail. The figures show:

Figure 1    a first embodiment of core steps of training a neural network;

Figure 2    a second embodiment of core steps of training a neural network;

Figure 3    a training system for training the classifier;

Figure 4    a control system comprising a machine learning system controlling an actuator in its environment;

Figure 5    the control system controlling an at least partially autonomous robot;

Figure 6    the control system controlling a manufacturing machine.

Description of the embodiments

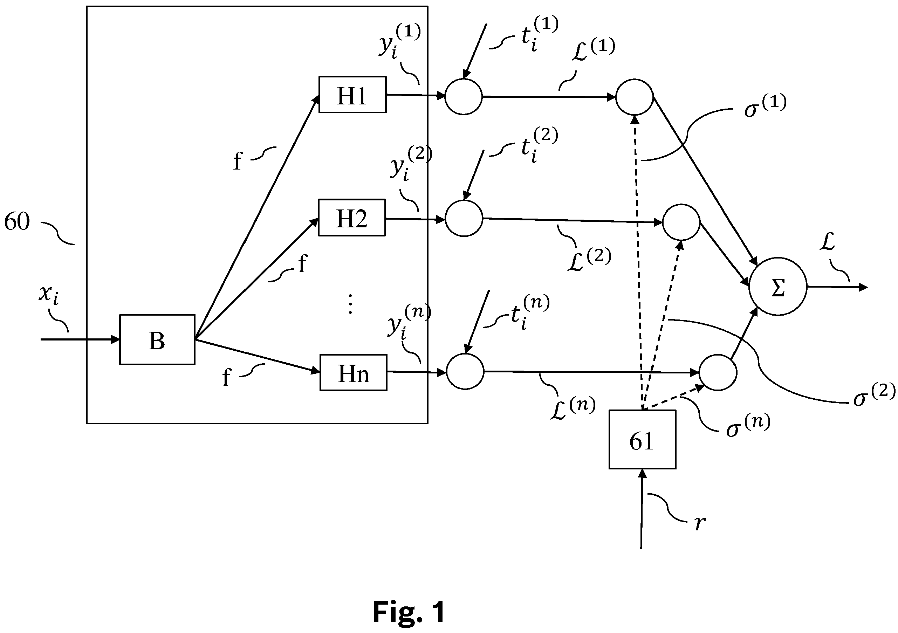

Figure 1 shows core steps of training a first neural network (60). A training input signal ($x_i$) is provided to the first neural network (60), wherein the training input signal ($x_i$) comprises or consists of a sensor signal, especially an image. The training input signal ($x_i$) is provided to a backbone (B) of the first neural network (60), wherein the backbone (B) may especially characterize a feedforward neural network.

Using the training input signal ($x_i$) as input, the backbone (B) preferably determines a feature representation (f), which is then used as input to a plurality of heads (H1, H2, Hn) of the first neural network (60). In other embodiments (not shown), the feature representation (f) provided by the backbone (B) is forwarded along a subsequent path of the first neural network (60), wherein the heads (H1, H2, Hn) branch off of this path. In the figure, three different heads are shown explicitly, but the dot notation indicates that a user of the first neural network (60) may choose the number of heads at his or her discretion. Each head may be understood as a neural network, especially a sub-neural network of the first neural network (61).

Each head (H1, H2, Hn) provides a respective training output signal $\left(y_i^{(1)}, y_i^{(2)}, y_i^{(n)}\right)$. For each training output signal $\left(y_i^{(1)}, y_i^{(2)}, y_i^{(n)}\right)$ a desired

training output signal $\left(t_i^{(1)}, t_i^{(2)}, t_i^{(n)}\right)$ is provided. Preferably, there are distinct desired training output signals $\left(t_i^{(1)}, t_i^{(2)}, t_i^{(n)}\right)$ for each training output signal $\left(y_i^{(1)}, y_i^{(2)}, y_i^{(n)}\right)$, but a desired training output signal $\left(t_i^{(1)}, t_i^{(2)}, t_i^{(n)}\right)$ may also be used for at least two different training output signals $\left(y_i^{(1)}, y_i^{(2)}, y_i^{(n)}\right)$. For each combination of training output signal $\left(y_i^{(1)}, y_i^{(2)}, y_i^{(n)}\right)$ and desired training output signal $\left(t_i^{(1)}, t_i^{(2)}, t_i^{(n)}\right)$ a loss value $\left(\mathcal{L}_i^{(1)}, \mathcal{L}_i^{(2)}, \mathcal{L}_i^{(n)}\right)$ is determined by providing the respective training output signal $\left(y_i^{(1)}, y_i^{(2)}, y_i^{(n)}\right)$ and desired training output signal $\left(t_i^{(1)}, t_i^{(2)}, t_i^{(n)}\right)$ to a loss function. The loss function may preferably be a function characterizing a negative log-likelihood such as the binary cross entropy loss function or the multinomial cross entropy loss function. The loss values $\left(\mathcal{L}_i^{(1)}, \mathcal{L}_i^{(2)}, \mathcal{L}_i^{(n)}\right)$ are then combined to a total loss value ($\mathcal{L}$) by means of a weighted sum ($\Sigma$).

The weights ($\sigma^{(1)}$, $\sigma^{(2)}$, $\sigma^{(n)}$) are provided by a second neural network (61). The second neural network (61) is configured to determine the weights ($\sigma^{(1)}$, $\sigma^{(2)}$, $\sigma^{(n)}$) by providing an input ($r$) to the second neural network (61). In the embodiment, the input ($r$) comprises a value, which is randomly drawn from a probability distribution, especially a standard normal distribution. Preferably, the input ($r$) is the value. In other embodiments, the input may comprise (preferably consist of) a plurality of values ($r$) drawn from a multivariate probability distribution, especially a multivariate Dirichlet distribution. In even further embodiments, the input may comprise (preferably consist of) a constant value as input ($r$), especially 0. In still further embodiments, the inputs may comprise (preferably consist of) a plurality of constant values as input ($r$), especially a plurality of 0s aligned in a vector, a matrix, or a tensor.

The second neural network (61) may preferably be configured as a multilayer perceptron. That is, the second neural network (61) may be configured to comprise only fully connected layers (sometimes also referred to as linear layers with non-linear functions).

Based on the weights ($\sigma^{(1)}$, $\sigma^{(2)}$, $\sigma^{(n)}$), the total loss value ($\mathcal{L}$) may then be determined by multiplying each weight ($\sigma^{(1)}$, $\sigma^{(2)}$, $\sigma^{(n)}$) with its respective loss value $\left(\mathcal{L}_i^{(1)}, \mathcal{L}_i^{(2)}, \mathcal{L}_i^{(n)}\right)$ and summing the results. Preferably, however, the total loss ($\mathcal{L}$) is determined according

to the formula

$$\mathcal{L} = \sum_{i=1}^{n} \frac{\mathcal{L}^{(i)}}{\sigma^{(i)2}} + \log \sigma^{(i)}.$$

The exponent of $\sigma^{(i)}$ and the weighting of the denominator may be chosen the user's discretion. The exponent and the weighting of the denominator may hence be understood as hyperparameters of the training method. At the user's discretion, the loss function may also be scaled by a constant factor, which can be considered a hyperparameter of the training method.

Not shown in Figure 1 are the remaining steps for training the first neural network (60) and/or the second neural network (61). Preferably, the remaining steps are determining a gradient with respect to parameters of the first neural network (60) and/or the second neural network (61) and updating the parameters according to a gradient descent method such as stochastic gradient descent. However, other optimization techniques are possible as well, such as evolutionary algorithms.

Figure 2 discloses a very similar embodiment to that disclosed in Figure 1 and only the differences to figure one will be explained in the following. In the embodiment disclosed in Figure 2, the input (b) to the second neural network (61) is determined based on a layer of the backbone (B), especially based on parameters of the layer. Especially a last layer of the backbone (B) may be used as the layer, wherein the last layer of the backbone (B) is a layer that provides at least parts of (preferably the entire) feature representation (f).

In this embodiment, the input (b) may, for example, be chosen to be the parameters (or parts of the parameters) of the layer. In another example, the input may be a gradient of the parameters (or a gradient of the parts of the parameters) of the backbone. For determining the gradient, the loss values $\left(\mathcal{L}_i^{(1)}, \mathcal{L}_i^{(2)}, \mathcal{L}_i^{(n)}\right)$ may, for example, be summed using uniform weights and the gradient may then be obtained based on performing backpropagation based on the uniformly weighted sum. The gradient may then be used as input to the second neural (61) for determining the weights ($\sigma^{(1)}$, $\sigma^{(2)}$, $\sigma^{(n)}$), which are then used to determine the total loss value ($\mathcal{L}$) backpropagation may then be run again using the total loss value ($\mathcal{L}$) for determining a gradient according to the weights ($\sigma^{(1)}$, $\sigma^{(2)}$, $\sigma^{(n)}$).

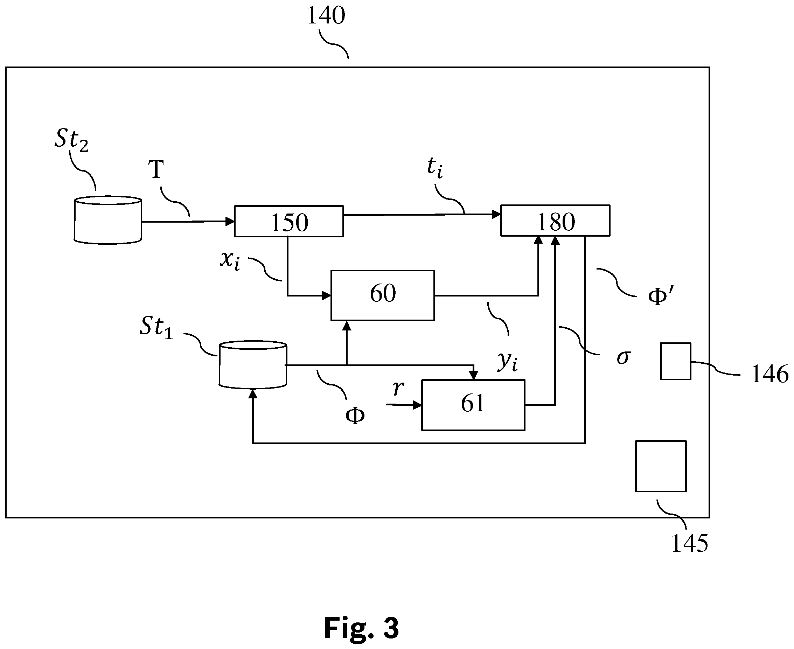

Figure 3 shows an embodiment of a training system (140) for training the first neural network (60) and the second neural network (61) by means of a training data set (T). The training data set (T) comprises a plurality of training input signals ($x_i$) which are used for training the neural network (60) and the second neural network (61), wherein the training data set (T) further comprises, for each training input signal ($x_i$), a plurality of desired train-

ing output signals ($t_i$) which correspond to the training input signal ($x_i$) and characterize a classification and/or a regression result of the training input signal ($x_i$). The training system (140) may be understood as being configured for executing the method for training disclosed in Figure 1 or Figure 2.

For training, a training data unit (150) accesses a computer-implemented database ($St_2$), the database ($St_2$) providing the training data set (T). The training data unit (150) determines from the training data set (T) preferably randomly at least one training input signal ($x_i$) and the desired training output signals ($t_i$) corresponding to the training input signal ($x_i$) and transmits the training input signal ($x_i$) to the first neural network (60). The first neural network (60) determines a plurality of training output signal ($y_i$) based on the training input signal ($x_i$).

The desired training output signals ($t_i$) and the determined training output signal ($y_i$) are transmitted to a modification unit (180). The modification unit (180) further receives weights ($\sigma$) from the second neural network (61). In the embodiment, the second neural network (61) is provided a randomly drawn value as input ($r$) for determining the weights ($\sigma$). In further embodiments, the input ($r$) may comprise or consist of a constant value. In still further embodiments, the input to the second neural network (61) may also be determined based on a backbone of the first neural network (61) as disclosed above.

Based on the desired output signals ($t_i$) and the determined output signals ($y_i$), the modification unit (180) then determines new parameters ($\Phi'$) for the machine first neural network (60) and the second neural network (61), preferably as disclosed above for the training method for training the first neural network (60).

The modification unit (180) determines the new parameters ($\Phi'$) based on the first loss value. In the given embodiment, this is done using a gradient descent method, preferably stochastic gradient descent, Adam, or AdamW. In further embodiments, training may also be based on an evolutionary algorithm or a second-order method for training neural networks.

In other preferred embodiments, the described training is repeated iteratively for a predefined number of iteration steps or repeated iteratively until the first loss value falls below a predefined threshold value. Alternatively or additionally, it is also conceivable that the training is terminated when an average first loss value with respect to a test or validation data set falls below a predefined threshold value. In at least one of the iterations the new parameters ($\Phi'$) determined in a previous iteration are used as parameters ($\Phi$) of the machine learning system (60).

Furthermore, the training system (140) may comprise at least one processor (145) and at least one machine-readable storage medium (146) containing instructions which, when executed by the processor (145), cause the training system (140) to execute a training method according to one of the aspects of the invention.

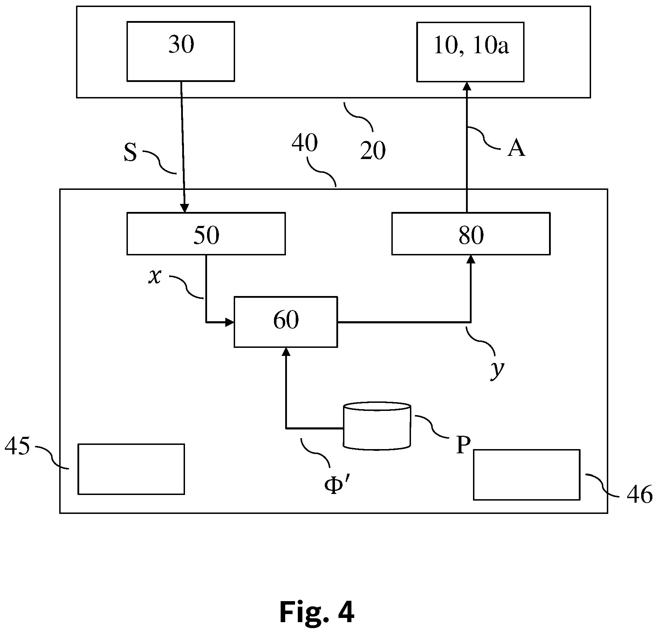

Figure 4 shows an embodiment of a control system (40) configured for controlling an actuator (10) in its environment (20) based on outputs of a first neural network (60), wherein the neural network has been trained with a method as disclosed above. The actuator (10) and its environment (20) will be jointly called actuator system. At preferably evenly spaced points in time, a sensor (30) senses a condition of the actuator system, e.g., a state of the environment (20) or an internal state of the control system (40) or the actuator (10). The sensor (30) may comprise several sensors. Preferably, the sensor (30) is an optical sensor that takes images of the environment (20). An output signal (S) of the sensor (30) (or in case the sensor (30) comprises a plurality of sensors, an output signal (S) for each of the sensors) which encodes the sensed condition is transmitted to the control system (40).

Thereby, the control system (40) receives a stream of sensor signals (S). It then computes a series of control signals (A) depending on the stream of sensor signals (S), which are then transmitted to the actuator (10).

The control system (40) receives the stream of sensor signals (S) of the sensor (30) in an optional receiving unit (50). The receiving unit (50) transforms the sensor signals (S) into input signals ($x$). Alternatively, in case of no receiving unit (50), each sensor signal (S) may directly be taken as an input signal ($x$). The input signal ($x$) may, for example, be given as an excerpt from the sensor signal (S). Alternatively, the sensor signal (S) may be processed to yield the input signal ($x$). In other words, the input signal ($x$) is provided in accordance with the sensor signal (S).

The input signal ($x$) is then passed on to the first neural network (60).

The first neural network (60 is parametrized by parameters ($\Phi$), which are stored in and provided by a parameter storage ($St_1$).

The first neural network (60 determines an output signal ($y$) from the input signals ($x$). The output signal ($y$) comprises information that assigns a plurality of labels to the input signal ($x$). The output signal ($y$) is transmitted to an optional conversion unit (80), which converts the output signal ($y$) into the control signals (A). The control signals (A) are then transmitted to the actuator (10) for controlling the actuator (10) accordingly. Alternatively, the output signal ($y$) may directly be taken as control signal (A).

The actuator (10) receives control signals (A), is controlled accordingly and carries out an action corresponding to the control signal (A). The actuator (10) may comprise a control logic which transforms the control signal (A) into a further control signal, which is then used to control actuator (10).

In further embodiments, the control system (40) may comprise the sensor (30). In even further embodiments, the control system (40) alternatively or additionally may comprise an actuator (10).

In still further embodiments, it can be envisioned that the control system (40) controls a display (10a) instead of or in addition to the actuator (10).

Furthermore, the control system (40) may comprise at least one processor (45) and at least one machine-readable storage medium (46) on which instructions are stored which, if carried out, cause the control system (40) to carry out a method according to an aspect of the invention.

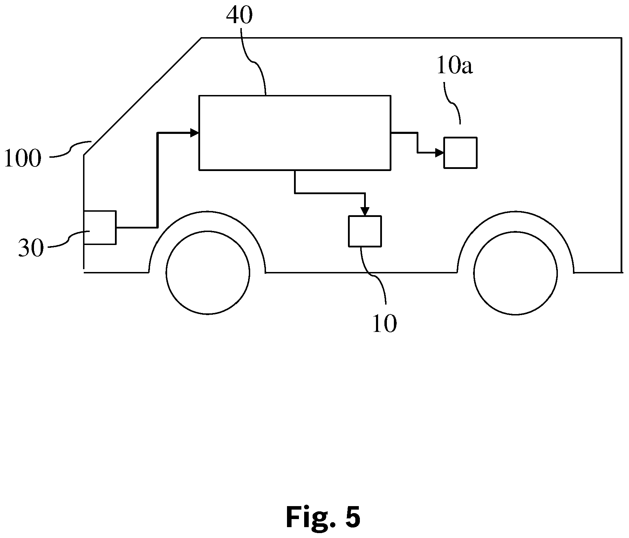

Figure 5 shows an embodiment in which the control system (40) is used to control an at least partially autonomous robot, e.g., an at least partially autonomous vehicle (100).

The sensor (30) may comprise one or more video sensors and/or one or more radar sensors and/or one or more ultrasonic sensors and/or one or more LiDAR sensors. Some or all of these sensors are preferably but not necessarily integrated in the vehicle (100). The input signal ($x$) may hence be understood as an input image and the first neural network (60 as an image classifier.

The first neural network (60 may be configured to detect objects in the vicinity of the at least partially autonomous robot based on the input image ($x$). In addition, the first neural network (60) may be configured to perform a semantic segmentation of the input image ($x$) and/or a single-label classification of the input image ($x$) and/or a multi-label classification of the input image ($x$).

Alternatively or additionally, the first neural network (60) may also be configured to determine a regression result of the input image ($x$), e.g., predict a velocity or speed of objects depicted in the input image ($x$). Each of the above mentioned information determined based on the input image ($x$) may be provided by a distinct head of the first neural network (60). The output signal ($y$) may hence provide information, which may then serve to determine a virtual copy of the real environment (20). The virtual copy may then be used to, e.g., plan trajectories that avoid collisions with objects and/or that allow for staying in a specific lane and/or follow a predefined route. The control signal (A) may then be determined in accordance with this planned path.

The actuator (10), which is preferably integrated in the vehicle (100), may be given by a brake, a propulsion system, an engine, a drivetrain, or a steering of the vehicle (100). The control signal (A) may be determined such that the actuator (10) is controlled such that vehicle (100) avoids collisions with the detected objects. The detected objects may also be classified according to what the first neural network (60) deems them most likely to be, e.g., pedestrians or trees, and the control signal (A) may be determined depending on the classification.

Alternatively or additionally, the control signal (A) may also be used to control the display (10a), e.g., for displaying the objects detected by the first neural network (60). It can also be imagined that the control signal (A) may control the display (10a) such that it produces a warning signal if the vehicle (100) is close to colliding with at least one of the detected objects. The warning signal may be a warning sound and/or a haptic signal, e.g., a vibration of a steering wheel of the vehicle.

In further embodiments, the at least partially autonomous robot may be given by another mobile robot (not shown), which may, for example, move by flying, swimming, diving or stepping. The mobile robot may, inter alia, be an at least partially autonomous lawn mower, or an at least partially autonomous cleaning robot. In all of the above embodiments, the control signal (A) may be determined such that propulsion unit and/or steering and/or brake of the mobile robot are controlled such that the mobile robot may avoid collisions with said identified objects.

In a further embodiment, the at least partially autonomous robot may be given by a gardening robot (not shown), which uses the sensor (30), preferably an optical sensor, to determine a state of plants in the environment (20). The actuator (10) may control a nozzle for spraying liquids and/or a cutting device, e.g., a blade. Depending on an identified species and/or an identified state of the plants, an control signal (A) may be determined to cause the actuator (10) to spray the plants with a suitable quantity of suitable liquids and/or cut the plants.

In even further embodiments, the at least partially autonomous robot may be given by a domestic appliance (not shown), like e.g. a washing machine, a stove, an oven, a microwave, or a dishwasher. The sensor (30), e.g., an optical sensor, may detect a state of an object which is to undergo processing by the household appliance. For example, in the case of the domestic appliance being a washing machine, the sensor (30) may detect a state of the laundry inside the washing machine. The control signal (A) may then be determined depending on a detected material of the laundry.

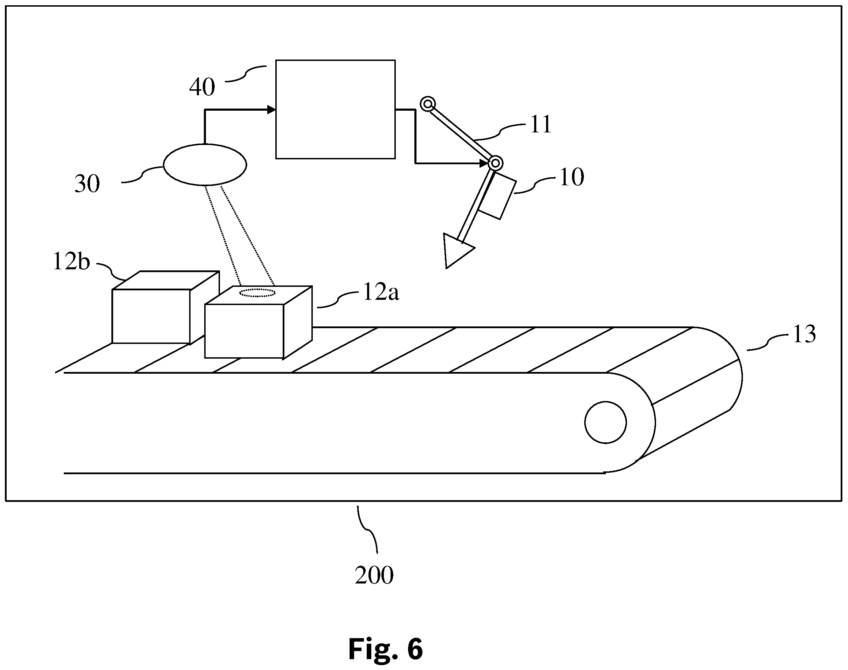

Figure 6 shows an embodiment in which the control system (40) is used to control a manufacturing machine (11), e.g., a punch cutter, a cutter, a gun drill or a gripper, of a manufacturing system (200), e.g., as part of a production line. The manufacturing machine may comprise a transportation device, e.g., a conveyor belt or an assembly line, which moves a manufactured product (12). The control system (40) controls an actuator (10), which in turn controls the manufacturing machine (11).

The sensor (30) may be given by an optical sensor which captures properties of, e.g., a manufactured product (12). The first neural network (60) may hence be understood as an image classifier.

The first neural network (60) may determine a position of the manufactured product (12) with respect to the transportation device as well as classify whether the manufactured product (12) exhibits a defect or should be sorted out for other reasons. Each of this information may be provided by a single head of the first neural network (60). The actuator (10) may then be controlled depending on the determined position of the manufactured product (12) for a subsequent manufacturing step of the manufactured product (12). For example, the actuator (10) may be controlled to cut the manufactured product at a specific location of the manufactured product itself. Alternatively, it may be envisioned that the machine learning system (60) classifies, whether the manufactured product is broken and/or exhibits a defect. The actuator (10) may then be controlled as to remove the manufactured product from the transportation device.

The term "computer" may be understood as covering any devices for the processing of pre-defined calculation rules. These calculation rules can be in the form of software, hardware or a mixture of software and hardware.

In general, a plurality can be understood to be indexed, that is, each element of the plurality is assigned a unique index, preferably by assigning consecutive integers to the elements contained in the plurality. Preferably, if a plurality comprises $N$ elements, wherein $N$ is the number of elements in the plurality, the elements are assigned the integers from 1 to $N$. It may also be understood that elements of the plurality can be accessed by their index.

**Claims**

1. Computer-implemented method for training a first neural network (60) comprising the steps of:

   • Receiving a training input signal ($x_i$), wherein the training input signal ($x_i$) comprises or is part of a signal (S) obtained from a sensor (30);
   • Determining a plurality ($y_i$) of training output signals $\left(y_i^{(1)}, y_i^{(2)}, y_i^{(n)}\right)$ by providing the training input signal ($x_i$) as input to the fist neural network (60), wherein each training output signal $\left(y_i^{(1)}, y_i^{(2)}, y_i^{(n)}\right)$ from the plurality ($y_i$) of training output signals $\left(y_i^{(1)}, y_i^{(2)}, y_i^{(n)}\right)$ characterizes a classification and/or a regression result of the training input signal ($x_i$);
   • Determining a plurality of loss values $\left(\mathcal{L}^{(1)}, \mathcal{L}^{(2)}, \mathcal{L}^{(n)}\right)$, wherein each loss value $\left(\mathcal{L}^{(1)}, \mathcal{L}^{(2)}, \mathcal{L}^{(n)}\right)$ corresponds to a distinct training output signal $\left(y_i^{(1)}, y_i^{(2)}, y_i^{(n)}\right)$ and characterizes a deviation of the training output signal $\left(y_i^{(1)}, y_i^{(2)}, y_i^{(n)}\right)$ from a desired training output signal $\left(t_i^{(1)}, t_i^{(2)}, t_i^{(n)}\right)$;
   • Determining a weighted sum ($\mathcal{L}$) of the loss values $\left(\mathcal{L}^{(1)}, \mathcal{L}^{(2)}, \mathcal{L}^{(n)}\right)$, wherein the weights ($\sigma^{(1)}, \sigma^{(2)}, \sigma^{(n)}$) for the loss values $\left(\mathcal{L}^{(1)}, \mathcal{L}^{(2)}, \mathcal{L}^{(n)}\right)$ are determined by a second neural network (61);
   • Training the first neural network (60) by updating parameters ($\Phi$) of the first neural network (60) according to a gradient of the weighted sum ($\mathcal{L}$) with respect to the parameters ($\Phi$) of the first neural network (60) and by updating parameters of the second neural network (61) according to a gradient of the weighted sum ($\mathcal{L}$) with respect the parameters of the second neural network (61).

2. Method according to claim 1, wherein the weights ($\sigma^{(1)}, \sigma^{(2)}, \sigma^{(n)}$) for the loss values $\left(\mathcal{L}^{(1)}, \mathcal{L}^{(2)}, \mathcal{L}^{(n)}\right)$ are determined by the second neural network (61) by providing a randomly drawn value ($r$) as input to the second neural network (61).

3. Method according to claim 1 or 2, wherein the weights ($\sigma^{(1)}, \sigma^{(2)}, \sigma^{(n)}$) for the loss values $\left(\mathcal{L}^{(1)}, \mathcal{L}^{(2)}, \mathcal{L}^{(n)}\right)$ are determined by the second neural network (61) by providing a value ($r$) drawn from a standard normal distribution as input to the second neural network (61).

4. Method according to claim 1 or 2, wherein the weights ($\sigma^{(1)}, \sigma^{(2)}, \sigma^{(n)}$) for the loss values $\left(\mathcal{L}^{(1)}, \mathcal{L}^{(2)}, \mathcal{L}^{(n)}\right)$ are determined by the second neural network (61) by providing a multidimensional value ($r$) drawn from a multivariate distribution, especially a multivariate Dirichlet distribution, as input to the second neural network (61).

5. Method according to claim 1, wherein the weights ($\sigma^{(1)}, \sigma^{(2)}, \sigma^{(n)}$) for the loss values $\left(\mathcal{L}^{(1)}, \mathcal{L}^{(2)}, \mathcal{L}^{(n)}\right)$ are determined by the second neural network (61) by providing an input (b) to the second neural network (61), wherein the input (b) is determined based on parameters of a layer of the first neural network (60), especially of a last layer of a backbone (B) of the first neural network (60).

6. Method according to claim 5, wherein the parameters of the layer are the input (b) of the second neural network (61).

7. Method according to claim 5, wherein the parameters of the layer are at least part of the parameters ($\Phi$) updated during training of the first neural network (60) and the parameters of the layer are used as input (b) of the second neural network (61) after updating the parameters of the layer.

**8.** Method according to claim 5, wherein a gradient of the parameters of the layer is the input (b) of the second neural network (61).

**9.** Method according to claim 1, wherein the weights ($\sigma^{(1)}$, $\sigma^{(2)}$, $\sigma^{(n)}$) for the loss values $\left(\mathcal{L}^{(1)}, \mathcal{L}^{(2)}, \mathcal{L}^{(n)}\right)$ are determined by the second neural network (61) by providing a constant value (r) or a plurality of constant values as input to the second neural network (61), wherein the constant value (r) is preferably zeros or wherein the plurality of constant values is preferably a vector of zeros.

**10.** Computer-implemented method for determining a plurality (y) of output signals, wherein each output signal characterizes a classification and/or regression result with respect to an input signal (x), wherein the input signal (x) comprises or is part of a sensor signal (S) and wherein the plurality of output signals (y) is determined by providing the input signal (x) as input to a first neural network (60), wherein the first neural network (60) has been trained with a method according to any one of the claims 1 to 9.

**11.** Training system (140), which is configured to carry out the training method according to any one of the claims 1 to 9.

**12.** Control system (40), which is configured to carry out the method according to claim 10, wherein the control system (40) determines a control signal (A) based on the plurality (y) of output signals, wherein the control signal (A) is configured to control an actuator (10) and/or a display (10a).

**13.** Computer program that is configured to cause a computer to carry out the method according to any one of the claims 1 to 10 with all of its steps if the computer program is carried out by a processor (45, 145).

**14.** Machine-readable storage medium (46, 146) on which the computer program according to claim 13 is stored.

**Fig. 1**

Fig. 2

**Fig. 3**

**Fig. 4**

EP 4 550 216 A1

**Fig. 5**

EP 4 550 216 A1

**Fig. 6**

EP 4 550 216 A1

Europäisches
Patentamt

European
Patent Office

Office européen
des brevets

# EUROPEAN SEARCH REPORT

**Application Number**

EP 23 20 7742

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2019/099305 A1 (MAGIC LEAP INC [US]) 23 May 2019 (2019-05-23) * equations (1) and (4); paragraphs [0035], [0037], [0038], [0040] – [0044]; figure 4 * | 1-14 | INV. G06N3/084 G06N3/0985 |
| X | Liu Shikun ET AL: "End-To-End Multi-Task Learning With Attention", , 5 April 2019 (2019-04-05), XP093145845, DOI: 10.48550/arXiv.1803.10704 Retrieved from the Internet: URL:https://arxiv.org/pdf/1803.10704v2.pdf [retrieved on 2024-03-26] * section 3.3, 4.1.1, 4.1.3 * | 1-14 | |
| A | US 2023/072747 A1 (POTOTZKY DANIEL [DE]) 9 March 2023 (2023-03-09) * paragraphs [0034], [0074]; figure 3 * | 1-14 | |

**TECHNICAL FIELDS SEARCHED (IPC)**

G06N

The present search report has been drawn up for all claims

| Place of search | Date of completion of the search | Examiner |
|---|---|---|
| Munich | 26 March 2024 | Thielemann, Benedikt |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

**EP 23 20 7742**

This annex lists the patent family members relating to the patent documents cited in the above-mentioned European search report.
The members are as contained in the European Patent Office EDP file on
The European Patent Office is in no way liable for these particulars which are merely given for the purpose of information.

**26-03-2024**

| Patent document cited in search report | Publication date | Patent family member(s) | Publication date |
|---|---|---|---|
| WO 2019099305 A1 | 23-05-2019 | AU 2018368279 A1 | 14-05-2020 |
| | | CA 3080005 A1 | 23-05-2019 |
| | | CN 111328400 A | 23-06-2020 |
| | | EP 3710990 A1 | 23-09-2020 |
| | | IL 274424 A | 30-06-2020 |
| | | JP 7213241 B2 | 26-01-2023 |
| | | JP 2021503122 A | 04-02-2021 |
| | | KR 20200087780 A | 21-07-2020 |
| | | US 2019147298 A1 | 16-05-2019 |
| | | US 2021406609 A1 | 30-12-2021 |
| | | WO 2019099305 A1 | 23-05-2019 |
| US 2023072747 A1 | 09-03-2023 | CN 115797992 A | 14-03-2023 |
| | | EP 4145402 A1 | 08-03-2023 |
| | | US 2023072747 A1 | 09-03-2023 |

EPO FORM P0459

For more details about this annex : see Official Journal of the European Patent Office, No. 12/82

**REFERENCES CITED IN THE DESCRIPTION**

**Non-patent literature cited in the description**

- **CRAWSHAW**. *MULTI-TASK LEARNING WITH DEEP NEURAL NETWORKS: A SURVEY*, 10 September 2022, https://arxiv.org/pdf/2009.09796. pdf

- **LIU et al.** *SSD: Single Shot MultiBox Detector*, 29 December 2016, https://arxiv.org/pdf/1512.02325. pdf